# EUROPEAN PATENT APPLICATION

(11) **EP 4 794 112 A1**
(43) Date of publication of application: **19.08.2026**
(21) Application number: 24925426.9
(22) Date of filing: 28.06.2024
(51) Int. Cl.: H01M 50/609, H01M 10/42

(54) **ELECTROLYTE INJECTION SYSTEM AND ELECTROLYTE INJECTION METHOD**

(30) Priority: 22.02.2024 CN 202410195263
(71) Applicant: Contemporary Amperex Technology Co., Limited, Ningde, Fujian 352100 (CN)
(72) Inventor: LIN, Xingyuan, Ningde, Fujian 352100 (CN); HE, Zhiming, Ningde, Fujian 352100 (CN)
(74) Representative: Ran, Handong
(86) International application number: PCT/CN2024/102407
(87) International publication number: WO 2025/175683

(57) **Abstract**

An electrolyte injection system (100) and an electrolyte injection method. The electrolyte injection system (100) comprises an electrolyte injection device (110), an upper computer (120), and a control device (130). The electrolyte injection device (110) is used for injecting an electrolyte into a battery cell in a battery cell electrolyte injection process. The upper computer (120) is used for: acquiring electrolyte injection data of the battery cell after battery cell electrolyte injection is completed, and locally recording the electrolyte injection data of the battery cell as historical electrolyte injection data; determining a first battery cell set placed in a battery cell tray that currently enters the electrolyte injection device **(110);** on the basis of the local historical electrolyte injection data, determining from among the first battery cell set a second battery cell set, electrolyte injection of which has not been completed; determining from among the second battery cell set a target battery cell set to be subjected to electrolyte injection; and sending to the control device (130) the position of each target battery cell in the target battery cell set in the battery cell tray. The control device (130) is used for controlling the electrolyte injection device (110) to perform electrolyte injection on the target battery cell set on the basis of the position corresponding to each target battery cell.

## Description

### CROSS-REFERENCE TO RELATED APPLICATIONS

The present disclosure is filed based on, and claims priority to, Chinese Patent Application No. 202410195263.6, filed on February 22, 2024 and entitled "Electrolyte Injection System and Electrolyte Injection Method", the entire content of which is hereby incorporated herein by reference.

### TECHNICAL FIELD

The present disclosure relates to, but is not limited to, the field of battery manufacturing technologies, and in particular, to an electrolyte injection system and an electrolyte injection method.

### BACKGROUND

During manufacturing of a battery product, a battery cell may be subjected to electrolyte injection by using an electrolyte injection system. However, for an electrolyte injection system in the related technologies, it is usually impossible to identify whether electrolyte injection of a battery cell has been completed before the battery cell exits a station, which may lead to the problem of electrolyte jetting due to repeated electrolyte injection, thereby affecting product quality and manufacturing efficiency, and resulting in material waste.

### SUMMARY

In view of this, embodiments of the present disclosure provide at least an electrolyte injection system and an electrolyte injection method, which can effectively reduce repeated electrolyte injection of a battery cell, thereby improving product quality and manufacturing efficiency, reducing material waste, and reducing manufacturing costs.

The technical solutions of the embodiments of the present disclosure are achieved as follows.

An embodiment of the present disclosure provides an electrolyte injection system, comprising:
an electrolyte injection device, an upper computer, and a control device, wherein
the electrolyte injection device is used for injecting an electrolyte into a battery cell in a battery cell electrolyte injection process;
the upper computer is used for acquiring electrolyte injection data of the battery cell after battery cell electrolyte injection is completed, and locally recording the electrolyte injection data of the battery cell as historical electrolyte injection data;
the upper computer is further used for determining a first battery cell set placed in a battery cell tray that currently enters the electrolyte injection device; on the basis of the local historical electrolyte injection data, determining from among the first battery cell set a second battery cell set, electrolyte injection of which has not been completed; determining from among the second battery cell set a target battery cell set to be subjected to electrolyte injection; and sending to the control device the position of each target battery cell in the target battery cell set in the battery cell tray; and
the control device is used for controlling the electrolyte injection device to perform electrolyte injection on the target battery cell set on the basis of the position corresponding to each target battery cell.

For the electrolyte injection system provided in the embodiment of the present disclosure, on the one hand, the upper computer acquires and locally records electrolyte injection data of a battery cell after battery cell electrolyte injection is completed. On the other hand, the upper computer determines, on the basis of local historical electrolyte injection data, from among the first battery cell set placed in a battery cell tray that currently enters the electrolyte injection device a second battery cell set of which electrolyte injection has not been completed, determines from among the second battery cell set a target battery cell set to be subjected to electrolyte injection, and then sends to the control device the position of each target battery cell in the target battery cell set in the battery cell tray, so that the control device controls the electrolyte injection device to perform electrolyte injection on the target battery cell set on the basis of the position corresponding to each target battery cell. In this manner, regardless of whether a battery cell has exited a station, it may be determined, on the basis of the historical electrolyte injection data locally recorded by the upper computer, whether electrolyte injection of the battery cell has been completed, so that repeated electrolyte injection of the battery cell can be effectively reduced, thereby improving product quality and manufacturing efficiency, reducing material waste, and reducing manufacturing costs. In addition, because the electrolyte injection data of the battery cell is acquired and locally recorded by the upper computer after battery cell electrolyte injection is completed, before the battery cell arrives at a feeding area and is ready to exit, it is convenient to quickly and reliably acquire the electrolyte injection data of the battery cell from the upper computer, without relying on data transmission between a control device for an electrolyte injection position and a control device for the feeding area. Therefore, it is not necessary to consider whether another handling line exists between the electrolyte injection position and the feeding area, thereby adapting to a wider range of electrolyte injection scenarios.

In some embodiments, the historical electrolyte injection data comprises electrolyte injection data corresponding to at least one battery cell of which electrolyte injection has been completed; the control device is used for acquiring the electrolyte injection data of the battery cell in the battery cell electrolyte injection process, and sending a data acquisition signal to the upper computer after determining that the electrolyte injection device completes the electrolyte injection of the battery cell; and the upper computer is used for acquiring the electrolyte injection data of the battery cell from the control device on the basis of the position of the battery cell in the battery cell tray, in response to receiving the data acquisition signal, and locally recording the electrolyte injection data of the battery cell.

In this manner, after determining that the electrolyte injection device completes the electrolyte injection of the battery cell, the control device may control the upper computer to acquire and record the electrolyte injection data of the battery cell in time by sending the data acquisition signal to the upper computer, thereby reducing the probability of losing the electrolyte injection data due to an abnormality such as power failure of the control device, and improving reliability in acquisition of the electrolyte injection data and operation stability of the electrolyte injection system.

In some embodiments, the upper computer is provided with a first display interface, wherein the first display interface comprises a data deletion area; and the upper computer is used for acquiring a tray identifier and/or a battery cell identifier to be subjected to data deletion, in response to receiving an electrolyte injection data deletion operation performed in the data deletion area, and determining and deleting electrolyte injection data corresponding to at least one battery cell on the basis of the tray identifier and/or the battery cell identifier to be subjected to data deletion.

In this manner, an operator may delete electrolyte injection data corresponding to a specific tray identifier and/or a specific battery cell identifier through the electrolyte injection data deletion operation performed in the data deletion area, thereby reducing the problem that electrolyte injection cannot be performed due to the fact that a battery cell of which electrolyte injection is not actually completed is erroneously recorded as having corresponding electrolyte injection data under an abnormal condition.

In some embodiments, the upper computer is used for acquiring a tray identifier of the battery cell tray, and acquiring from a manufacturing execution system the first battery cell set placed in the battery cell tray, on the basis of the tray identifier.

In this manner, the first battery cell set may be quickly and accurately acquired from the manufacturing execution system on the basis of the tray identifier of the battery cell tray.

In some embodiments, the control device is used for sending an identifier acquisition signal to the upper computer in response to detecting that the battery cell tray enters the electrolyte injection device; the upper computer is used for acquiring a first on/off state in response to receiving the identifier acquisition signal, and acquiring the tray identifier of the battery cell tray on the basis of the first on/off state, wherein the first on/off state represents whether an identifier input function is turned on.

In this manner, the tray identifier of the battery cell tray may be flexibly acquired on the basis of an on/off state of the identifier input function, so that a requirement of an actual manufacturing scenario can be better satisfied.

In some embodiments, the upper computer is provided with a second display interface, wherein the second display interface comprises an identifier input area; and the upper computer is used for acquiring the input tray identifier in response to receiving a tray identifier input operation performed in the identifier input area, when the first on/off state is a first state, wherein the first state represents that the identifier input function is turned on.

In this manner, by turning on the identifier input function, the operator can manually input a tray identifier in the identifier input area, thereby better satisfying a requirement of an actual manufacturing scenario.

In some embodiments, the electrolyte injection system further comprises a scanning device, wherein the upper computer is used for sending a scan command to the scanning device when the first on/off state is a second state; the scanning device is used for performing scan processing on the battery cell tray in response to the scan command to obtain a scan result, and returning the scan result to the upper computer; and the upper computer is used for determining the tray identifier on the basis of the scan result, wherein the second state represents that the identifier input function is turned off.

In this manner, when the identifier input function is turned off, the scanning device may be automatically activated to scan the battery cell tray, and the tray identifier may be determined on the basis of the scan result of the scanning device, thereby improving the degree of automation in the electrolyte injection process, and improving manufacturing efficiency.

In some embodiments, the upper computer is used for acquiring the tray identifier obtained by scanning from the scan result when the scan result represents that tray scanning is normal; or the upper computer is used for outputting first prompt information when the scan result represents that tray scanning is abnormal, wherein the first prompt information is used for prompting whether to turn on the identifier input function.

In this manner, on the one hand, when the scan result represents that the tray scanning is normal, the tray identifier obtained by scanning from the scan result makes the acquired tray identifier more accurate. On the other hand, when the scan result represents that the tray scanning is abnormal, the first prompt information is output to prompt the operator whether to turn on the identifier input function, which can reduce errors in the battery cell electrolyte injection process due to the abnormal tray scanning, and enable the operator to detect the abnormality in time, thereby improving operation stability of the electrolyte injection system.

In some embodiments, the upper computer comprises a third display interface, wherein the third display interface comprises a first function configuration area; and the upper computer is used for setting the first on/off state to the first state representing that the identifier input function is turned on, in response to receiving an operation of turning on the identifier input function performed in the first function configuration area; or the upper computer is used for setting the first on/off state to the second state representing that the identifier input function is turned off, in response to receiving an operation of turning off the identifier input function performed in the first function configuration area.

In this manner, the identifier input function may be flexibly turned on or turned off in the first function configuration area, thereby adapting to different application scenarios to better satisfy actual manufacturing requirements.

In some embodiments, the upper computer is used for acquiring a second on/off state, and determining from among the second battery cell set the target battery cell set on the basis of the second on/off state, wherein the second on/off state represents whether an abnormality ignoring function is turned on.

In this manner, the target battery cell set to be subjected to electrolyte injection may be flexibly determined from among the second battery cell set on the basis of an on-state of the abnormality ignoring function, so that a requirement of an actual manufacturing scenario may be better satisfied.

In some embodiments, the upper computer is used for determining the second battery cell set as the target battery cell set when the second on/off state is a third state, wherein the third state represents that the abnormality ignoring function is turned on.

In this manner, electrolyte injection can be performed on a battery cell with an abnormality by turning on the abnormality ignoring function, thereby better satisfying a requirement of an actual manufacturing scenario.

In some embodiments, the upper computer is used for: sending to the manufacturing execution system an electrolyte injection station entry request for the second battery cell set to obtain a station entry request result; determining at least one battery cell with an abnormality during station entry in the second battery cell set on the basis of the station entry request result, when the second on/off state is a fourth state; and removing the at least one battery cell with an abnormality during station entry from the second battery cell set to obtain the target battery cell set, wherein the fourth state represents that the abnormality ignoring function is turned off.

In this manner, when the abnormality ignoring function is turned off, the at least one battery cell with an abnormality during station entry in the second battery cell set may be removed from the second battery cell set to obtain the target battery cell set to be subjected to electrolyte injection, so that the accuracy of battery cell electrolyte injection can be improved in a scenario in which the abnormality ignoring function is turned off.

In some embodiments, the upper computer is provided with a fourth display interface, wherein the fourth display interface comprises a second function configuration area; and the upper computer is used for setting the second on/off state to the third state representing that the abnormality ignoring function is turned on, in response to receiving an operation of turning on the abnormality ignoring function performed in the second function configuration area; or the upper computer is used for setting the second on/off state to the fourth state representing that the abnormality ignoring function is turned off, in response to receiving an operation of turning off the abnormality ignoring function performed in the second function configuration area.

In this manner, the abnormality ignoring function may be flexibly turned on or turned off in the second function configuration area, thereby adapting to different application scenarios to better satisfy actual manufacturing requirements.

An embodiment of the present disclosure provides an electrolyte injection method, which is applied to an upper computer and comprises:
determining a first battery cell set placed in a battery cell tray that currently enters an electrolyte injection device;
on the basis of local historical electrolyte injection data of the upper computer, determining from among the first battery cell set a second battery cell set, electrolyte injection of which has not been completed, wherein the historical electrolyte injection data is acquired and locally recorded by the upper computer after battery cell electrolyte injection is completed; determining from among the second battery cell set a target battery cell set to be subjected to electrolyte injection; and
sending to the control device the position of each target battery cell in the target battery cell set in the battery cell tray, so that the control device controls the electrolyte injection device to perform electrolyte injection on the target battery cell set on the basis of the position corresponding to each target battery cell.

For the electrolyte injection method provided in the embodiment of the present disclosure, on the one hand, the upper computer acquires and locally records electrolyte injection data of a battery cell after battery cell electrolyte injection is completed. On the other hand, the upper computer determines, on the basis of local historical electrolyte injection data, from among the first battery cell set placed in a battery cell tray that currently enters the electrolyte injection device a second battery cell set of which electrolyte injection has not been completed, determines from among the second battery cell set a target battery cell set to be subjected to electrolyte injection, and then sends to the control device the position of each target battery cell in the target battery cell set in the battery cell tray, so that the control device controls the electrolyte injection device to perform electrolyte injection on the target battery cell set on the basis of the position corresponding to each target battery cell. In this manner, regardless of whether a battery cell has exited a station, it may be determined, on the basis of the historical electrolyte injection data locally recorded by the upper computer, whether electrolyte injection of the battery cell has been completed, so that repeated electrolyte injection of the battery cell can be effectively reduced, thereby improving product quality and manufacturing efficiency, reducing material waste, and reducing manufacturing costs. In addition, because the electrolyte injection data of the battery cell is acquired and locally recorded by the upper computer after battery cell electrolyte injection is completed, before the battery cell arrives at a feeding area and is ready to exit, it is convenient to quickly and reliably acquire the electrolyte injection data of the battery cell from the upper computer, without relying on data transmission between a control device for an electrolyte injection position and a control device for the feeding area. Therefore, it is not necessary to consider whether another handling line exists between the electrolyte injection position and the feeding area, thereby adapting to a wider range of electrolyte injection scenarios.

In some embodiments, the historical electrolyte injection data comprises electrolyte injection data corresponding to at least one battery cell of which electrolyte injection has been completed; before the on the basis of local historical electrolyte injection data of the upper computer, determining from among the first battery cell set a second battery cell set, electrolyte injection of which has not been completed, the method further comprises: acquiring electrolyte injection data of the battery cell from the control device on the basis of the position of the battery cell in the battery cell tray, in response to receiving a data acquisition signal sent by the control device, wherein the electrolyte injection data of the battery cell is acquired by the control device in the battery cell electrolyte injection process, and the data acquisition signal is sent by the control device to the upper computer after it is determined that the electrolyte injection device completes the electrolyte injection of the battery cell; and locally recording the electrolyte injection data of the battery cell.

In this manner, after determining that the electrolyte injection device completes the electrolyte injection of the battery cell, the control device may control the upper computer to acquire and record the electrolyte injection data of the battery cell in time by sending the data acquisition signal to the upper computer, thereby reducing the probability of losing the electrolyte injection data due to an abnormality such as power failure of the control device, and improving reliability in acquisition of the electrolyte injection data and operation stability of the electrolyte injection system.

In some embodiments, the upper computer is provided with a first display interface, wherein the first display interface comprises a data deletion area; and the method further comprises: acquiring a tray identifier and/or a battery cell identifier to be subjected to data deletion, in response to receiving an electrolyte injection data deletion operation performed in the data deletion area; and determining and deleting electrolyte injection data corresponding to at least one battery cell on the basis of the tray identifier and/or the battery cell identifier to be subjected to data deletion.

In this manner, an operator may delete electrolyte injection data corresponding to a specific tray identifier and/or a specific battery cell identifier through the electrolyte injection data deletion operation performed in the data deletion area, thereby reducing the problem that electrolyte injection cannot be performed due to the fact that a battery cell of which electrolyte injection is not actually completed is erroneously recorded as having corresponding electrolyte injection data under an abnormal condition.

In some embodiments, the determining a first battery cell set placed in a battery cell tray that currently enters an electrolyte injection device comprises: acquiring a tray identifier of the battery cell tray; and acquiring from a manufacturing execution system the first battery cell set placed in the battery cell tray, on the basis of the tray identifier.

In this manner, the first battery cell set may be quickly and accurately acquired from the manufacturing execution system on the basis of the tray identifier of the battery cell tray.

In some embodiments, the acquiring a tray identifier of the battery cell tray comprises: acquiring a first on/off state in response to receiving an identifier acquisition signal sent by the control device, wherein the first on/off state represents whether an identifier input function is turned on, and the identifier acquisition signal is sent by the control device when it is detected that the battery cell tray enters the electrolyte injection device; and acquiring the tray identifier of the battery cell tray on the basis of the first on/off state.

In this manner, the tray identifier of the battery cell tray may be flexibly acquired on the basis of an on/off state of the identifier input function, so that a requirement of an actual manufacturing scenario can be better satisfied.

In some embodiments, the upper computer is provided with a second display interface, wherein the second display interface comprises an identifier input area; and the acquiring the tray identifier of the battery cell tray on the basis of the first on/off state comprises: acquiring the input tray identifier in response to receiving a tray identifier input operation performed in the identifier input area, when the first on/off state is a first state, wherein the first state represents that the identifier input function is turned on.

In this manner, by turning on the identifier input function, the operator can manually input a tray identifier in the identifier input area, thereby better satisfying a requirement of an actual manufacturing scenario.

In some embodiments, the upper computer is provided with a second display interface, wherein the second display interface comprises an identifier input area; and the acquiring the tray identifier of the battery cell tray on the basis of the first on/off state comprises: sending a scan command to a scanning device when the first on/off state is a second state, and determining the tray identifier on the basis of a scan result returned by the scanning device in response to the scan command, wherein the second state represents that the identifier input function is turned off.

In this manner, when the identifier input function is turned off, the scanning device may be automatically activated to scan the battery cell tray, and the tray identifier may be determined on the basis of the scan result of the scanning device, thereby improving the degree of automation in the electrolyte injection process, and improving manufacturing efficiency.

In some embodiments, the determining the tray identifier on the basis of a scan result returned by the scanning device in response to the scan command comprises one of the following: acquiring the tray identifier obtained by scanning from the scan result when the scan result represents that tray scanning is normal; or outputting first prompt information when the scan result represents that tray scanning is abnormal, wherein the first prompt information is used for prompting whether to turn on the identifier input function.

In this manner, on the one hand, when the scan result represents that the tray scanning is normal, the tray identifier obtained by scanning from the scan result makes the acquired tray identifier more accurate. On the other hand, when the scan result represents that the tray scanning is abnormal, the first prompt information is output to prompt the operator whether to turn on the identifier input function, which can reduce errors in the battery cell electrolyte injection process due to the abnormal tray scanning, and enable the operator to detect the abnormality in time, thereby improving operation stability of the electrolyte injection system.

In some embodiments, the determining from among the second battery cell set a target battery cell set to be subjected to electrolyte injection comprises: acquiring a second on/off state, wherein the second on/off state represents whether an abnormality ignoring function is turned on; and determining from among the second battery cell set the target battery cell set on the basis of the second on/off state.

In this manner, the target battery cell set to be subjected to electrolyte injection may be flexibly determined from among the second battery cell set on the basis of an on-state of the abnormality ignoring function, so that a requirement of an actual manufacturing scenario may be better satisfied.

In some embodiments, the determining from among the second battery cell set the target battery cell set on the basis of the second on/off state comprises one of the following:

determining the second battery cell set as the target battery cell set when the second on/off state is a third state, wherein the third state represents that the abnormality ignoring function is turned on;

sending to the manufacturing execution system an electrolyte injection station entry request for the second battery cell set to obtain a station entry request result; determining at least one battery cell with an abnormality during station entry in the second battery cell set on the basis of the station entry request result, when the second on/off state is a fourth state; and removing the at least one battery cell with an abnormality during station entry from the second battery cell set to obtain the target battery cell set, wherein the fourth state represents that the abnormality ignoring function is turned off.

In this manner, on the one hand, electrolyte injection can be performed on a battery cell with an abnormality by turning on the abnormality ignoring function, thereby better satisfying a requirement of an actual manufacturing scenario. On the other hand, when the abnormality ignoring function is turned off, the at least one battery cell with an abnormality during station entry in the second battery cell set may be removed from the second battery cell set to obtain the target battery cell set to be subjected to electrolyte injection, so that the accuracy of battery cell electrolyte injection can be improved in a scenario in which the abnormality ignoring function is turned off.

It should be understood that the above general descriptions and the following detailed descriptions are merely for illustration and explanation purposes and are not intended to limit the technical solutions of the present disclosure.

### BRIEF DESCRIPTION OF THE DRAWINGS

The accompanying drawings herein are incorporated into the specification and constitute a part of the specification, and these accompanying drawings show embodiments consistent with the present disclosure and are used together with the specification to illustrate the technical solutions of the present disclosure.
FIG. 1 is a schematic diagram I of a composition structure of an electrolyte injection system according to an embodiment of the present disclosure;
FIG. 2 is a schematic diagram of a first display interface according to an embodiment of the present disclosure;
FIG. 3 is a schematic diagram of a second display interface according to an embodiment of the present disclosure;
FIG. 4 is a schematic diagram II of a composition structure of an electrolyte injection system according to an embodiment of the present disclosure;
FIG. 5 is a schematic diagram of a third display interface according to an embodiment of the present disclosure;
FIG. 6 is a schematic diagram of a fourth display interface according to an embodiment of the present disclosure;
FIG. 7 is a schematic diagram showing an implementation process of an electrolyte injection method according to an embodiment of the present disclosure;
FIG. 8 is a schematic diagram showing implementation of a secondary electrolyte injection data acquisition process according to an embodiment of the present disclosure;
FIG. 9 is a schematic diagram showing implementation of a tray scanning station entry process according to an embodiment of the present disclosure;
FIG. 10 is a schematic diagram showing implementation of acquiring a tray identifier in an electrolyte injection method according to an embodiment of the present disclosure; and
FIG. 11 is a schematic diagram showing implementation of determining a target battery cell set to be subjected to electrolyte injection in an electrolyte injection method according to an embodiment of the present disclosure.

### DETAILED DESCRIPTION OF PREFERRED EMBODIMENTS

To make the objectives, technical solutions, and advantages of the present disclosure clearer, the technical solutions of the present disclosure will be further described in detail below with reference to the accompanying drawings and embodiments. The described embodiments should not be construed as limitations on the present disclosure. All other embodiments obtained by those of ordinary skill in the art without creative efforts shall fall within the protection scope of the present disclosure.

In the following description, reference is made to "some embodiments" which describe a subset of all possible embodiments, but it may be understood that "some embodiments" may be the same subset or different subsets of all possible embodiments, and may be combined with each other without conflict.

The terms "first/second/third" involved are only used to distinguish between similar objects, and do not represent a specific order of the objects. It may be understood that "first/second/third" may be interchanged in a specific order or sequence when permitted, so that the embodiments of the present disclosure described herein can be implemented in an order other than those illustrated or described herein.

Unless otherwise defined, all technical and scientific terms used herein have the same meaning as commonly understood by those skilled in the art to which the present disclosure belongs. The terms used herein are merely for the purpose of describing the present disclosure and are not intended to limit the present disclosure.

The following describes the embodiments of the present disclosure in detail.

Currently, new energy batteries are becoming more and more widely used in life and industry. New energy batteries are used not only in energy storage power systems such as hydropower, thermal power, wind power, and solar power plants, but also widely used in electric vehicles such as electric bicycles, electric motorcycles, and electric automobiles, as well as aerospace, and many other fields. As an application field of power batteries continues to expand, a market demand for power batteries continues to increase.

In the embodiments of the present disclosure, cells may be battery cells. A battery cell is a fundamental unit capable of achieving conversion between chemical energy and electrical energy, and can be used to manufacture a battery module or a battery pack, so as to supply power to an electrical device. A battery cell may be a secondary battery, a secondary battery is a battery cell that may be continuously used by activating an active material by means of charging the battery cell after the battery cell is discharged. The battery cell may be a lithium ion battery, a sodium ion battery, a sodium-lithium ion battery, a lithium metal battery, a sodium metal battery, a lithium-sulfur battery, a magnesium ion battery, a nickel-hydrogen battery, a nickel-cadmium battery, a lead-acid battery, or the like, which is not limited in the embodiments of the present disclosure. In the embodiments of the present disclosure, a battery may be a single physical module including one or a plurality of battery cells to provide a higher voltage and capacity. When there are a plurality of battery cells, the plurality of battery cells are connected in series, in parallel, or in series-parallel via a busbar component.

For an electrolyte injection system in the related technologies, it is usually impossible to identify whether electrolyte injection of a battery cell has been completed before the battery cell exits a station. However, in an scenario in which electrolyte injection of a battery cell is performed by using a tray-based electrolyte injection method, a battery cell tray loaded with battery cells usually employs a recycling and reuse mechanism, and thus the same battery cell tray is used multiple times a day. If a battery cell of which electrolyte injection has been completed in the battery cell tray is not normally removed, the battery cell may enter an electrolyte injection device again along with the battery cell tray for repeated electrolyte injection, which may lead to the problem of electrolyte jetting, thereby affecting product quality and manufacturing efficiency, and resulting in material waste.

In addition, when a battery cell is ready to exit after electrolyte injection is completed, an electrolyte injection station exit request may be sent to a manufacturing execution system (MES) to upload electrolyte injection data of the battery cell to the MES, which is convenient for subsequent traceability of manufacturing data. In the related technologies, after acquiring electrolyte injection data of a battery cell, a control device for a electrolyte injection position may transmit the electrolyte injection data to a control device for a feeding area for uploading the electrolyte injection data in a battery cell station exit process. However, for some electrolyte injection scenarios (such as a tray-based electrolyte injection scenario), other handling lines from different suppliers may exist between the electrolyte injection position and the feeding area, so that data transmission between the control device for the electrolyte injection position and the control device for the feeding area cannot be achieved, and thus the electrolyte injection data of the battery cell cannot be uploaded in the battery cell station exit process.

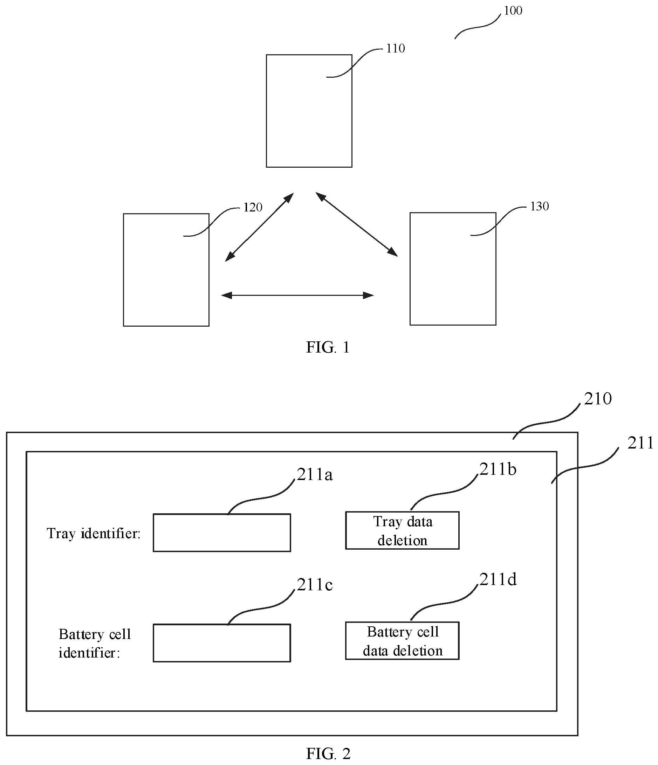

In view of this, an embodiment of the present disclosure provides an electrolyte injection system, as shown in FIG. 1, the electrolyte injection system 100 includes an electrolyte injection device 110, an upper computer 120 and a control device 130, where:
the electrolyte injection device 110 is used for injecting an electrolyte into a battery cell in a battery cell electrolyte injection process;
the upper computer 120 is used for acquiring electrolyte injection data of the battery cell after battery cell electrolyte injection is completed, and locally recording the electrolyte injection data of the battery cell as historical electrolyte injection data;
the upper computer 120 is further used for determining a first battery cell set placed in a battery cell tray that currently enters the electrolyte injection device 110; on the basis of the local historical electrolyte injection data, determining from among the first battery cell set a second battery cell set, electrolyte injection of which has not been completed; determining from among the second battery cell set a target battery cell set to be subjected to electrolyte injection; and sending to the control device 130 the position of each target battery cell in the target battery cell set in the battery cell tray.

The control device 130 is used for controlling the electrolyte injection device 110 to perform electrolyte injection on the target battery cell set on the basis of the position corresponding to each target battery cell.

It may be understood that the electrolyte injection system 100 may be applied to, but is not limited to, a primary electrolyte injection process, a secondary electrolyte injection process and/or an electrolyte replenishment process of the battery cell.

In some implementations, the electrolyte injection device 110 may inject an electrolyte into a battery cell by using a tray-based electrolyte injection method. In implementation, a battery cell set to be subjected to electrolyte injection may be loaded into a battery cell tray and sent to the electrolyte injection device 110, and then at least one electrolyte injection pump in the electrolyte injection device 110 is used to inject the electrolyte into a battery cell placed in at least one position in the battery cell tray. In implementation, the electrolyte injection device 110 may be arranged at an electrolyte injection position in a electrolyte injection station.

The upper computer 120 may be used for controlling an electrolyte injection process. In implementation, the upper computer 120 may be, for example, at least one of a server, a notebook computer, a tablet computer, a desktop computer, a smartphone, and the like.

After battery cell electrolyte injection is completed, the upper computer 120 may directly acquire electrolyte injection data of a battery cell from the electrolyte injection device on the basis of the position of the battery cell in the tray, or may acquire electrolyte injection data of the battery cell from the control device for the electrolyte injection position on the basis of the position of the battery cell in the tray.

After electrolyte injection of all battery cells in the battery cell tray is completed, the upper computer 120 may acquire and locally record electrolyte injection data of the battery cells on the basis of the positions of the battery cells in the battery cell tray. The upper computer 120 may also acquire and locally record electrolyte injection data of a battery cell in the battery cell tray on the basis of the position of the battery cell in the tray immediately after electrolyte injection of the battery cell is completed, without waiting for electrolyte injection of all the battery cells in the battery cell set to be completed. Electrolyte injection data of a battery cell may include electrolyte injection process data of the battery cell, for example, at least one of an electrolyte injection amount, electrolyte injection duration, an electrolyte retention capacity, a weighing result before electrolyte injection, and the like.

When it is determined that there is a battery cell tray that currently enters the electrolyte injection device 110, the upper computer 120 may determine a first battery cell set placed in the battery cell tray in any suitable manner, which is not limited in the embodiments of the present disclosure. In implementation, each battery cell in the first battery cell set may be identified by using a battery cell barcode, or may be identified by using a position of the battery cell in the battery cell tray.

In some implementations, battery cell sets respectively placed in at least one battery cell tray on a handling line may be stored locally in the upper computer 120 and/or in a manufacturing execution system in advance. The upper computer 120 may query and obtain a first battery cell set placed in the battery cell tray locally from the upper computer and/or from the manufacturing execution system on the basis of a tray identifier of the battery cell tray that currently enters the electrolyte injection device.

In some implementations, the upper computer 120 may use a scanning device to perform scan processing on each battery cell placed in the battery cell tray that currently enters the electrolyte injection device, to obtain the first battery cell set placed in the battery cell tray.

After the first battery cell set is determined, the upper computer 120 may query local historical electrolyte injection data to determine whether electrolyte injection of each battery cell in the first battery cell set has been completed, so as to determine a second battery cell set of which electrolyte injection has not been completed. In some implementations, the upper computer 120 may locally record electrolyte injection data of a battery cell in the upper computer 120 by using a battery cell identifier of the battery cell as an index. The upper computer 120 may locally search for electrolyte injection data of each battery cell in the first battery cell set on the basis of a battery cell identifier of the battery cell, and determine that electrolyte injection of the battery cell has been completed when the electrolyte injection data of the battery cell is found, or determine that electrolyte injection of the battery cell has not been completed when the electrolyte injection data of the battery cell is not found. The battery cell identifier may include, but is not limited to, at least one of a battery cell barcode, a tray code of a battery cell tray that carries the battery cell, the position of the battery cell in the battery cell tray, and the like.

In some implementations, the upper computer 120 may determine each battery cell in the second battery cell set as a target battery cell to be subjected to electrolyte injection, that is, directly use the second battery cell set as the target battery cell set.

In some implementations, the upper computer 120 may send a battery cell station entry request to the manufacturing execution system on the basis of the second battery cell set, and receive a station entry request result returned by the manufacturing execution system in response to the battery cell station entry request. On the basis of the station entry request result, the upper computer 120 may determine at least one battery cell with an abnormality during station entry in the second battery cell set. The upper computer 120 may remove the battery cell with an abnormality during station entry in the second battery cell set to obtain the target battery cell set.

The control device 130 may be used for controlling an operation process of each mechanism in the electrolyte injection station. In implementation, the control device 130 may be, for example, an industrial personal computer, a programmable logic controller (PLC), or the like. For example, the control device 130 may be a PLC used for controlling an operation process of the electrolyte injection device 110.

For the electrolyte injection system provided in the embodiment of the present disclosure, on the one hand, the upper computer acquires and locally records electrolyte injection data of a battery cell after battery cell electrolyte injection is completed. On the other hand, the upper computer determines, on the basis of local historical electrolyte injection data, from among the first battery cell set placed in a battery cell tray that currently enters the electrolyte injection device a second battery cell set of which electrolyte injection has not been completed, determines from among the second battery cell set a target battery cell set to be subjected to electrolyte injection, and then sends to the control device the position of each target battery cell in the target battery cell set in the battery cell tray, so that the control device controls the electrolyte injection device to perform electrolyte injection on the target battery cell set on the basis of the position corresponding to each target battery cell. In this manner, regardless of whether a battery cell has exited a station, it may be determined, on the basis of the historical electrolyte injection data locally recorded by the upper computer, whether electrolyte injection of the battery cell has been completed, so that repeated electrolyte injection of the battery cell can be effectively reduced, thereby improving product quality and manufacturing efficiency, reducing material waste, and reducing manufacturing costs. In addition, because the electrolyte injection data of the battery cell is acquired and locally recorded by the upper computer after battery cell electrolyte injection is completed, before the battery cell arrives at a feeding area and is ready to exit, it is convenient to quickly and reliably acquire the electrolyte injection data of the battery cell from the upper computer, without relying on data transmission between a control device for an electrolyte injection position and a control device for the feeding area. Therefore, it is not necessary to consider whether another handling line exists between the electrolyte injection position and the feeding area, thereby adapting to a wider range of electrolyte injection scenarios.

In some embodiments, the historical electrolyte injection data includes electrolyte injection data corresponding to at least one battery cell of which electrolyte injection has been completed.

The control device 130 is used for acquiring the electrolyte injection data of the battery cell in the battery cell electrolyte injection process, and sending a data acquisition signal to the upper computer 120 after determining that the electrolyte injection device 110 completes the electrolyte injection of the battery cell.

The upper computer 120 is used for acquiring the electrolyte injection data of the battery cell from the control device 130 on the basis of the position of the battery cell in the battery cell tray, in response to receiving the data acquisition signal, and locally recording the electrolyte injection data of the battery cell.

In some implementations, the control device 130 may acquire electrolyte injection data of a battery cell in the battery cell electrolyte injection process, and store the electrolyte injection data of the battery cell by using the position of the battery cell in the battery cell tray as an index. After receiving the data acquisition signal, the upper computer 120 may acquire from the control device 130 the electrolyte injection data of the battery cell corresponding to the position on the basis of the position of the battery cell in the battery cell tray.

In some implementations, the control device 130 may acquire electrolyte injection data of a battery cell in the battery cell electrolyte injection process, and store the electrolyte injection data of the battery cell by using a battery cell identifier of the battery cell as an index. The upper computer 120 may pre-store a correspondence between the position of each battery cell placed in the battery cell tray and a battery cell identifier, and when a data acquisition signal is received, the upper computer 120 may query the correspondence on the basis of the position of the battery cell in the tray to obtain a battery cell identifier of the battery cell, and acquire from the control device 130 electrolyte injection data of the battery cell corresponding to the battery cell identifier.

In the above embodiments, after determining that the electrolyte injection device completes the electrolyte injection of the battery cell, the control device may control the upper computer to acquire and record the electrolyte injection data of the battery cell in time by sending the data acquisition signal to the upper computer, thereby reducing the probability of losing the electrolyte injection data due to an abnormality such as power failure of the control device, and improving reliability in acquisition of the electrolyte injection data and operation stability of the electrolyte injection system.

In some embodiments, the upper computer 120 is provided with a first display interface, where the first display interface includes a data deletion area. The upper computer 120 is used for acquiring a tray identifier and/or a battery cell identifier to be subjected to data deletion, in response to receiving an electrolyte injection data deletion operation performed in the data deletion area, and determining and locally deleting electrolyte injection data corresponding to at least one battery cell on the basis of the tray identifier and/or the battery cell identifier to be subjected to data deletion.

Here, the tray identifier to be subjected to data deletion may be a tray identifier of a battery cell tray to which a battery cell whose electrolyte injection data is to be deleted belongs. The battery cell identifier to be subjected to data deletion may be a battery cell identifier of a battery cell whose electrolyte injection data is to be deleted.

In some implementations, the electrolyte injection data deletion operation performed in the data deletion area may be an operation of deleting electrolyte injection data of all battery cells in a battery cell tray. The upper computer 120 may acquire the tray identifier of the battery cell tray to be subjected to data deletion, in response to the electrolyte injection data deletion operation, determine at least one battery cell in the battery cell tray on the basis of the tray identifier, and locally delete electrolyte injection data corresponding to the at least one battery cell from the upper computer 120.

In some implementations, the electrolyte injection data deletion operation performed in the data deletion area may be an operation of deleting electrolyte injection data of a battery cell, and the battery cell identifier may include a battery cell barcode of the battery cell. The upper computer 120 may acquire the battery cell barcode of the battery cell to be subjected to data deletion, in response to the electrolyte injection data deletion operation, and locally delete the electrolyte injection data of the battery cell from the upper computer 120 on the basis of the battery cell barcode.

In some implementations, the electrolyte injection data deletion operation performed in the data deletion area may be an operation of deleting electrolyte injection data of a battery cell located at a position in a battery cell tray, and the battery cell identifier may include the position of the battery cell in the battery cell tray. The upper computer 120 may acquire, in response to the electrolyte injection data deletion operation, a tray identifier of a battery cell tray in which the battery cell to be subjected to data deletion is located and the position of the battery cell in the battery cell tray, and determine and locally delete electrolyte injection data of the battery cell from the upper computer 120 on the basis of the tray identifier and the position.

In implementation, an interface layout of the data deletion area and an operation manner of the electrolyte injection data deletion operation may be determined by those skilled in the art based on an actual condition, which are not limited in the embodiments of the present disclosure.

In some implementations, the data deletion area may include a battery cell list, and the battery cell list may include at least one battery cell of which electrolyte injection data is locally recorded on the upper computer 120. Each battery cell in the battery cell list may correspond to one data deletion control. The electrolyte injection data deletion operation may include a trigger operation on a data deletion control corresponding to at least one battery cell. An operator may locally delete electrolyte injection data of a battery cell from the upper computer 120 by triggering a data deletion control corresponding to the battery cell in the data deletion area.

In some implementations, the data deletion area may include a tray identifier input control and/or a battery cell identifier input control, and the operator may input a tray identifier by using the tray identifier input control and/or input a battery cell identifier by using the battery cell identifier input control to trigger the electrolyte injection data deletion operation.

For example, referring to FIG. 2, a first display interface 210 may include a data deletion area 211, and the data deletion area 211 may include a tray identifier input control 211a, a tray data deletion control 211b, a battery cell identifier input control 211c, and a battery cell data deletion control 211d. The operator may input a tray identifier to be subjected to data deletion by using the tray identifier input control 211a, and perform an electrolyte injection data deletion operation by triggering the tray data deletion control 211b. The upper computer may determine, in response to the electrolyte injection data deletion operation, at least one battery cell in the battery cell tray on the basis of the tray identifier, and locally delete electrolyte injection data corresponding to the at least one battery cell from the upper computer. The operator may input a battery cell identifier to be subjected to data deletion by using the battery cell identifier input control 211c, and perform an electrolyte injection data deletion operation by triggering the battery cell data deletion control 211d. The upper computer may acquire an input battery cell barcode in response to the electrolyte injection data deletion operation, determine, on the basis of the battery cell barcode, a battery cell to be subjected to data deletion, and locally delete electrolyte injection data of the battery cell from the upper computer.

In this manner, an operator may delete electrolyte injection data corresponding to a specific tray identifier and/or a specific battery cell identifier through the electrolyte injection data deletion operation performed in the data deletion area, thereby reducing the problem that electrolyte injection cannot be performed due to the fact that a battery cell of which electrolyte injection is not actually completed is erroneously recorded as having corresponding electrolyte injection data under an abnormal condition.

In some embodiments, the upper computer 120 is used for acquiring a tray identifier of the battery cell tray, and acquiring from a manufacturing execution system the first battery cell set placed in the battery cell tray, on the basis of the tray identifier.

Here, battery cells placed in each battery cell tray on the handling line may be recorded in advance by the manufacturing execution system, and the upper computer 120 may acquire from the manufacturing execution system a first battery cell set placed in a battery cell tray by using a tray identifier of the battery cell tray that currently enters the electrolyte injection device 110.

In implementation, the upper computer 120 may acquire the tray identifier of the battery cell tray in any suitable manner, which is not limited in the embodiments of the present disclosure. For example, the upper computer 120 may control the scanning device to perform scan processing on the battery cell tray that currently enters the electrolyte injection device 110, to obtain the tray identifier of the battery cell tray. For another example, the upper computer 120 may acquire an input tray identifier of a battery cell tray in response to a tray identifier input operation performed on a display interface.

In this manner, the first battery cell set may be quickly and accurately acquired from the manufacturing execution system on the basis of the tray identifier of the battery cell tray.

In some embodiments, the control device 130 is used for sending an identifier acquisition signal to the upper computer 120 in response to detecting that the battery cell tray enters the electrolyte injection device 110.

The upper computer 120 is used for acquiring a first on/off state in response to receiving the identifier acquisition signal, and acquiring the tray identifier of the battery cell tray on the basis of the first on/off state, where the first on/off state represents whether an identifier input function is turned on.

Here, the control device 130 may send the identifier acquisition signal to the upper computer 120 in any suitable manner, which is not limited in the embodiments of the present disclosure.

In some implementations, an identifier acquisition trigger point may be preset in the control device 130, and the control device 130 may send the identifier acquisition signal by writing a preset trigger point value into the identifier acquisition trigger point when it is detected that the battery cell tray enters the electrolyte injection device 110. The upper computer 120 may determine that the identifier acquisition signal is received when the preset trigger point value is read from the identifier acquisition point.

The identifier input function is a function of receiving, by the upper computer 120, a manually input tray identifier. The first on/off state represents whether the identifier input function is turned on. In implementation, the first on/off state may be preset by the operator based on an actual condition, or may be automatically determined by the upper computer 120 based on a current manufacturing scenario, which is not limited herein.

It may be understood that because the first on/off state may be used to represent whether the identifier input function is turned on, the upper computer 120 may determine whether to receive the tray identifier manually input by the operator on the basis of the first on/off state, thereby acquiring the tray identifier of the battery cell tray in a corresponding manner. In some implementations, when the identifier input function is turned on, the upper computer 120 may acquire the tray identifier manually input by the operator. In some implementations, when the identifier input function is turned on, instead of receiving the tray identifier manually input by the operator, the upper computer 120 acquires the tray identifier of the battery cell tray that currently enters the electrolyte injection device 110 in another manner, for example, automatically acquires the tray identifier by means of scanning for identification.

In the above embodiments, the tray identifier of the battery cell tray may be flexibly acquired on the basis of an on/off state of the identifier input function, so that a requirement of an actual manufacturing scenario can be better satisfied.

In some embodiments, the upper computer 120 is provided with a second display interface, where the second display interface includes an identifier input area.

The upper computer 120 is used for acquiring the input tray identifier in response to receiving a tray identifier input operation performed in the identifier input area, when the first on/off state is a first state, where the first state represents that the identifier input function is turned on.

In implementation, an interface layout of the identifier input area and an operation manner of the tray identifier input operation may be determined by those skilled in the art based on an actual condition, which are not limited in the embodiments of the present disclosure.

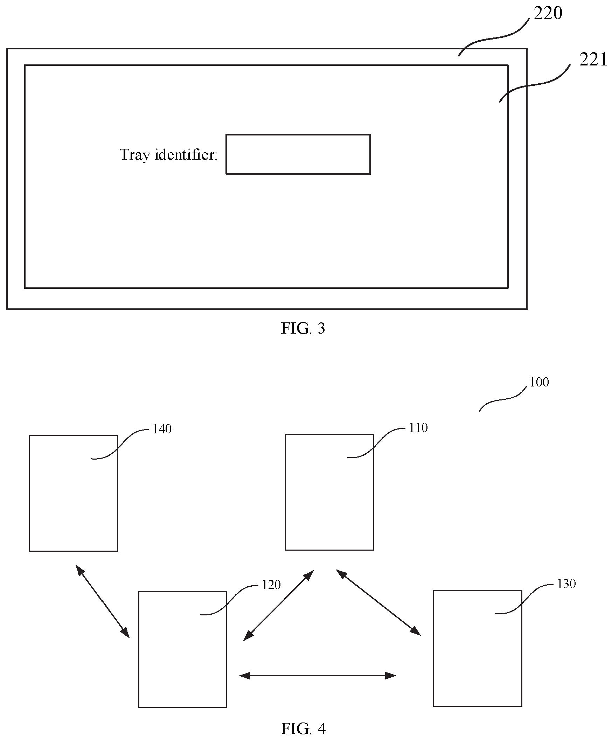

For example, referring to FIG. 3, a second display interface 220 may include an identifier input area 221, and the operator may perform a tray identifier input operation in the identifier input area 221.

It may be understood that in an actual manufacturing scenario, there may be a case in which the upper computer cannot automatically acquire the tray identifier of the battery cell tray that currently enters the electrolyte injection device 110, for example, a case in which scanning on the battery cell tray fails, a case in which no code can be scanned due to detachment of an identification barcode from the battery cell tray, or the like. According to the embodiments of the present disclosure, by turning on the identifier input function, the operator can manually input a tray identifier in the identifier input area, thereby better satisfying a requirement of an actual manufacturing scenario.

In some embodiments, referring to FIG. 4, the electrolyte injection system 100 further includes a scanning device 140.

The upper computer 120 is used for sending a scan command to the scanning device 140 when the first on/off state is a second state.

The scanning device 140 is used for performing scan processing on the battery cell tray in response to the scan command to obtain a scan result, and returning the scan result to the upper computer 120.

The upper computer 120 is used for determining the tray identifier on the basis of the scan result, where the second state represents that the identifier input function is turned off.

It may be understood that a battery cell tray is usually provided with an identification barcode for identifying the battery cell tray, and the upper computer 120 may control, by sending a scan command to the scanning device 140, the scanning device 140 to perform scan processing on an identification barcode at a preset position on the battery cell tray to obtain a scan result.

In the above embodiments, when the identifier input function is turned off, the scanning device may be automatically activated to scan the battery cell tray, and the tray identifier may be determined on the basis of the scan result of the scanning device, thereby improving the degree of automation in the electrolyte injection process, and improving manufacturing efficiency.

In some embodiments, the upper computer 120 is used for acquiring the tray identifier obtained by scanning from the scan result when the scan result represents that tray scanning is normal; or

the upper computer 120 is used for outputting first prompt information when the scan result represents that tray scanning is abnormal, where the first prompt information is used for prompting whether to turn on the identifier input function.

It may be understood that normal tray scanning means that the tray identifier of the current battery cell tray is successfully obtained through scan processing. Abnormal tray scanning means that the tray identifier of the current battery cell tray cannot be successfully obtained through scan processing, for example, the tray identifier cannot be obtained due to detachment of an identification barcode from the battery cell tray, an abnormality of the scanning device 140, and the like.

In this manner, on the one hand, when the scan result represents that the tray scanning is normal, the tray identifier obtained by scanning from the scan result makes the acquired tray identifier more accurate. On the other hand, when the scan result represents that the tray scanning is abnormal, the first prompt information is output to prompt the operator whether to turn on the identifier input function, which can reduce errors in the battery cell electrolyte injection process due to the abnormal tray scanning, and enable the operator to detect the abnormality in time, thereby improving operation stability of the electrolyte injection system.

In some embodiments, the upper computer 120 includes a third display interface, where the third display interface includes a first function configuration area.

The upper computer 120 is used for setting the first on/off state to the first state representing that the identifier input function is turned on, in response to receiving an operation of turning on the identifier input function performed in the first function configuration area; or

the upper computer 120 is used for setting the first on/off state to the second state representing that the identifier input function is turned off, in response to receiving an operation of turning off the identifier input function performed in the first function configuration area.

In implementation, an interface layout of the first function configuration area and an operation manner of the operation of turning on/turning off the identifier input function may be determined by those skilled in the art based on an actual condition, which are not limited in the embodiments of the present disclosure.

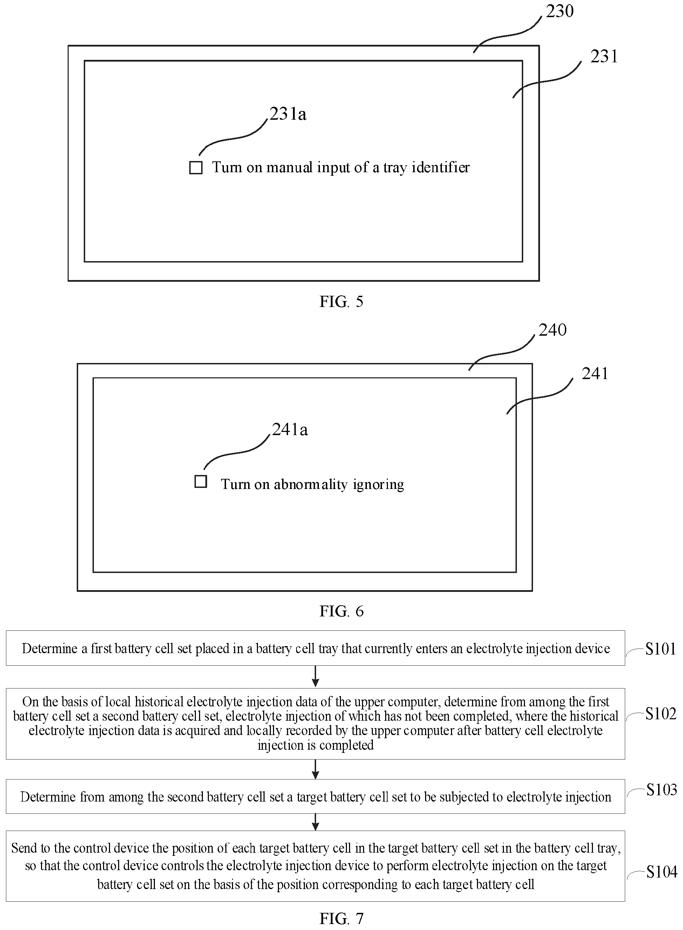

For example, referring to FIG. 5, a third display interface 230 may include a first function configuration area 231, and the operator may trigger a first on/off control 231a in the first function configuration area 231 to perform the operation of turning on or turning off the identifier input function.

It should be noted that the third display interface and the second display interface may be implemented as the same display interface, or may be implemented as two different display interfaces.

In this manner, the identifier input function may be flexibly turned on or turned off in the first function configuration area, thereby adapting to different application scenarios to better satisfy actual manufacturing requirements.

In some embodiments, the upper computer 120 is used for acquiring a second on/off state, and determining from among the second battery cell set the target battery cell set on the basis of the second on/off state, where the second on/off state represents whether an abnormality ignoring function is turned on.

Here, the abnormality ignoring function means that electrolyte injection is performed on a battery cell in the battery cell tray in the electrolyte injection process, regardless of whether the battery cell is in an abnormal state. The second on/off state represents whether the abnormality ignoring function is turned on. In implementation, the second on/off state may be preset by the operator based on an actual condition, or may be automatically determined by the upper computer 120 based on a current manufacturing scenario, which is not limited herein.

It may be understood that because the second on/off state may be used to represent whether the abnormality ignoring function is turned on, the upper computer 120 may determine, on the basis of the second on/off state, whether electrolyte injection is performed on a battery cell in an abnormal state, thereby determining from among the second battery cell set a corresponding target battery cell set.

In this manner, the target battery cell set to be subjected to electrolyte injection may be flexibly determined from among the second battery cell set on the basis of an on-state of the abnormality ignoring function, so that a requirement of an actual manufacturing scenario may be better satisfied.

In some embodiments, the upper computer 120 is used for determining the second battery cell set as the target battery cell set when the second on/off state is a third state, where the third state represents that the abnormality ignoring function is turned on.

In this manner, electrolyte injection can be performed on a battery cell with an abnormality by turning on the abnormality ignoring function, thereby better satisfying a requirement of an actual manufacturing scenario.

In some embodiments, the upper computer 120 is used for: sending to the manufacturing execution system an electrolyte injection station entry request for the second battery cell set to obtain a station entry request result; determining at least one battery cell with an abnormality during station entry in the second battery cell set on the basis of the station entry request result, when the second on/off state is a fourth state; and removing the at least one battery cell with an abnormality during station entry from the second battery cell set to obtain the target battery cell set, where the fourth state represents that the abnormality ignoring function is turned off.

Here, the manufacturing execution system may determine, on the basis of the electrolyte injection station entry request for the second battery cell set sent by the upper computer 120, whether each battery cell in the second battery cell set satisfies a condition for entering the station for electrolyte injection, and return a corresponding station entry request result. It may be understood that the station entry request result returned by the manufacturing execution system may include request result information corresponding to each battery cell in the second battery cell set, and the request result information may represent whether the corresponding battery cell enters the station abnormally. If a battery cell satisfies the condition for entering the station for electrolyte injection, the request result information corresponding to the battery cell represents that the battery cell enters the station normally. If a battery cell does not satisfy the condition for entering the station for electrolyte injection, the request result information corresponding to the battery cell represents that the battery cell enters the station abnormally.

In this manner, when the abnormality ignoring function is turned off, the at least one battery cell with an abnormality during station entry in the second battery cell set may be removed from the second battery cell set to obtain the target battery cell set to be subjected to electrolyte injection, so that the accuracy of battery cell electrolyte injection can be improved in a scenario in which the abnormality ignoring function is turned off.

In some embodiments, the upper computer 120 is provided with a fourth display interface, where the fourth display interface includes a second function configuration area.

The upper computer 120 is used for setting the second on/off state to the third state representing that the abnormality ignoring function is turned on, in response to receiving an operation of turning on the abnormality ignoring function performed in the second function configuration area; or
the upper computer 120 is used for setting the second on/off state to the fourth state representing that the abnormality ignoring function is turned off, in response to receiving an operation of turning off the abnormality ignoring function performed in the second function configuration area.

The operator may perform an operation of turning on or turning off the abnormality ignoring function in the second function configuration area of the fourth display interface. In implementation, an interface layout of the second function configuration area and an operation manner of the operation of turning on/turning off the abnormality ignoring function may be determined by those skilled in the art based on an actual condition, which are not limited in the embodiments of the present disclosure.

For example, referring to FIG. 6, a fourth display interface 240 may include a second function configuration area 241, and the operator may trigger a second on/off control 241a in the second function configuration area 241 to perform the operation of turning on or turning off the abnormality ignoring function.

In this manner, the abnormality ignoring function may be flexibly turned on or turned off in the second function configuration area, thereby adapting to different application scenarios to better satisfy actual manufacturing requirements.

An embodiment of the present disclosure provides an electrolyte injection method, where the electrolyte injection method may be executed by an upper computer. FIG. 7 is a schematic diagram showing an implementation process of an electrolyte injection method according to an embodiment of the present disclosure, as shown in FIG. 7, the method may include the following step S101 to step S104:

step S101: determining a first battery cell set placed in a battery cell tray that currently enters an electrolyte injection device;

step S102: on the basis of local historical electrolyte injection data of the upper computer, determining from among the first battery cell set a second battery cell set, electrolyte injection of which has not been completed, where the historical electrolyte injection data is acquired and locally recorded by the upper computer after battery cell electrolyte injection is completed;

step S103: determining from among the second battery cell set a target battery cell set to be subjected to electrolyte injection; and

step S104: sending to a control device the position of each target battery cell in the target battery cell set in the battery cell tray, so that the control device controls the electrolyte injection device to perform electrolyte injection on the target battery cell set on the basis of the position corresponding to each target battery cell.

For the electrolyte injection method provided in the embodiment of the present disclosure, on the one hand, the upper computer acquires and locally records electrolyte injection data of a battery cell after battery cell electrolyte injection is completed. On the other hand, the upper computer determines, on the basis of local historical electrolyte injection data, from among the first battery cell set placed in a battery cell tray that currently enters the electrolyte injection device a second battery cell set of which electrolyte injection has not been completed, determines from among the second battery cell set a target battery cell set to be subjected to electrolyte injection, and then sends to the control device the position of each target battery cell in the target battery cell set in the battery cell tray, so that the control device controls the electrolyte injection device to perform electrolyte injection on the target battery cell set on the basis of the position corresponding to each target battery cell. In this manner, regardless of whether a battery cell has exited a station, it may be determined, on the basis of the historical electrolyte injection data locally recorded by the upper computer, whether electrolyte injection of the battery cell has been completed, so that repeated electrolyte injection of the battery cell can be effectively reduced, thereby improving product quality and manufacturing efficiency, reducing material waste, and reducing manufacturing costs. In addition, because the electrolyte injection data of the battery cell is acquired and locally recorded by the upper computer after battery cell electrolyte injection is completed, before the battery cell arrives at a feeding area and is ready to exit, it is convenient to quickly and reliably acquire the electrolyte injection data of the battery cell from the upper computer, without relying on data transmission between a control device for an electrolyte injection position and a control device for the feeding area. Therefore, it is not necessary to consider whether another handling line exists between the electrolyte injection position and the feeding area, thereby adapting to a wider range of electrolyte injection scenarios.

In some embodiments, the historical electrolyte injection data includes electrolyte injection data corresponding to at least one battery cell of which electrolyte injection has been completed. Before step S102, the method further includes the following step S111 to step S112:
step S111: acquiring electrolyte injection data of the battery cell from the control device on the basis of the position of the battery cell in the battery cell tray, in response to receiving a data acquisition signal sent by the control device, where the electrolyte injection data of the battery cell is acquired by the control device in the battery cell electrolyte injection process, and the data acquisition signal is sent by the control device to the upper computer after it is determined that the electrolyte injection device completes the electrolyte injection of the battery cell; and
step S112: locally recording the electrolyte injection data of the battery cell.

In this manner, after determining that the electrolyte injection device completes the electrolyte injection of the battery cell, the control device may control the upper computer to acquire and record the electrolyte injection data of the battery cell in time by sending the data acquisition signal to the upper computer, thereby reducing the probability of losing the electrolyte injection data due to an abnormality such as power failure of the control device, and improving reliability in acquisition of the electrolyte injection data and operation stability of the electrolyte injection system.

In some embodiments, the upper computer is provided with a first display interface, where the first display interface includes a data deletion area. The method further includes the following step S121 to step S122:
step S121: acquiring a tray identifier and/or a battery cell identifier to be subjected to data deletion, in response to receiving an electrolyte injection data deletion operation performed in the data deletion area; and
step S122: determining and deleting electrolyte injection data corresponding to at least one battery cell on the basis of the tray identifier and/or the battery cell identifier to be subjected to data deletion.

In this manner, an operator may delete electrolyte injection data corresponding to a specific tray identifier and/or a specific battery cell identifier through the electrolyte injection data deletion operation performed in the data deletion area, thereby reducing the problem that electrolyte injection cannot be performed due to the fact that a battery cell of which electrolyte injection is not actually completed is erroneously recorded as having corresponding electrolyte injection data under an abnormal condition.

In some embodiments, step S102 may include: determining, on the basis of the historical electrolyte injection data, an electrolyte injection completion state of each battery cell in the first battery cell set; and removing, on the basis of the electrolyte injection completion state, battery cells of which electrolyte injection has been completed in the first battery cell set to obtain the second battery cell set.

In some implementations, when the historical electrolyte injection data includes electrolyte injection data of the battery cell, it may be determined that the electrolyte injection completion state of the battery cell is "electrolyte injection completed", or when the historical electrolyte injection data does not include electrolyte injection data of the battery cell, it may be determined that the electrolyte injection completion state of the battery cell is "electrolyte injection uncompleted".

In this manner, it may be quickly and accurately determined whether electrolyte injection of each battery cell in the first battery cell set has been completed, so as to obtain an accurate second battery cell set.

In some embodiments, step S101 may include the following step S131 to step S132:
step S131: acquiring a tray identifier of the battery cell tray; and
step S132: acquiring from a manufacturing execution system the first battery cell set placed in the battery cell tray, on the basis of the tray identifier.

In this manner, the first battery cell set may be quickly and accurately acquired from the manufacturing execution system on the basis of the tray identifier of the battery cell tray.

In some embodiments, step S131 may include the following step S141 to step S142:
step S141: acquiring a first on/off state in response to receiving an identifier acquisition signal sent by the control device, where the first on/off state represents whether an identifier input function is turned on, and the identifier acquisition signal is sent by the control device when it is detected that the battery cell tray enters the electrolyte injection device; and
step S142: acquiring the tray identifier of the battery cell tray on the basis of the first on/off state.

In this manner, the tray identifier of the battery cell tray may be flexibly acquired on the basis of an on/off state of the identifier input function, so that a requirement of an actual manufacturing scenario can be better satisfied.

In some embodiments, the upper computer is provided with a second display interface, where the second display interface includes an identifier input area. Step S142 may include: acquiring the input tray identifier in response to receiving a tray identifier input operation performed in the identifier input area, when the first on/off state is a first state, where the first state represents that the identifier input function is turned on.

In this manner, by turning on the identifier input function, the operator can manually input a tray identifier in the identifier input area, thereby better satisfying a requirement of an actual manufacturing scenario.

In some embodiments, the upper computer is provided with a second display interface, where the second display interface includes an identifier input area. Step S142 may include: sending a scan command to a scanning device when the first on/off state is a second state, and determining the tray identifier on the basis of a scan result returned by the scanning device in response to the scan command, where the second state represents that the identifier input function is turned off.

In this manner, when the identifier input function is turned off, the scanning device may be automatically activated to scan the battery cell tray, and the tray identifier may be determined on the basis of the scan result of the scanning device, thereby improving the degree of automation in the electrolyte injection process, and improving manufacturing efficiency.

In some embodiments, the determining the tray identifier on the basis of a scan result returned by the scanning device in response to the scan command in step S142 may include the following step S151 or step S152:
step S151: acquiring the tray identifier obtained by scanning from the scan result when the scan result represents that tray scanning is normal; or
step S152: outputting first prompt information when the scan result represents that tray scanning is abnormal, where the first prompt information is used for prompting whether to turn on the identifier input function.

In this manner, on the one hand, when the scan result represents that the tray scanning is normal, the tray identifier obtained by scanning from the scan result makes the acquired tray identifier more accurate. On the other hand, when the scan result represents that the tray scanning is abnormal, the first prompt information is output to prompt the operator whether to turn on the identifier input function, which can reduce errors in the battery cell electrolyte injection process due to the abnormal tray scanning, and enable the operator to detect the abnormality in time, thereby improving operation stability of the electrolyte injection system.

In some embodiments, the upper computer includes a third display interface, where the third display interface includes a first function configuration area. The method further includes the following step S161 or step S162:
step S161: setting the first on/off state to the first state representing that the identifier input function is turned on, in response to receiving an operation of turning on the identifier input function performed in the first function configuration area; or
step S162: setting the first on/off state to the second state representing that the identifier input function is turned off, in response to receiving an operation of turning off the identifier input function performed in the first function configuration area.

In this manner, the identifier input function may be flexibly turned on or turned off in the first function configuration area, thereby adapting to different application scenarios to better satisfy actual manufacturing requirements.

In some embodiments, step S103 may include the following step S171 and step S172:
step S171: acquiring a second on/off state, where the second on/off state represents whether an abnormality ignoring function is turned on; and
step S172: determining from among the second battery cell set the target battery cell set on the basis of the second on/off state.

In this manner, the target battery cell set to be subjected to electrolyte injection may be flexibly determined from among the second battery cell set on the basis of an on-state of the abnormality ignoring function, so that a requirement of an actual manufacturing scenario may be better satisfied.

In some embodiments, step S172 may include: determining the second battery cell set as the target battery cell set when the second on/off state is a third state, where the third state represents that the abnormality ignoring function is turned on.

In this manner, electrolyte injection can be performed on a battery cell with an abnormality by turning on the abnormality ignoring function, thereby better satisfying a requirement of an actual manufacturing scenario.

In some embodiments, step S172 may include: sending to the manufacturing execution system an electrolyte injection station entry request for the second battery cell set to obtain a station entry request result; determining at least one battery cell with an abnormality during station entry in the second battery cell set on the basis of the station entry request result, when the second on/off state is a fourth state; and removing the at least one battery cell with an abnormality during station entry from the second battery cell set to obtain the target battery cell set, where the fourth state represents that the abnormality ignoring function is turned off.

In this manner, when the abnormality ignoring function is turned off, the at least one battery cell with an abnormality during station entry in the second battery cell set may be removed from the second battery cell set to obtain the target battery cell set to be subjected to electrolyte injection, so that the accuracy of battery cell electrolyte injection can be improved in a scenario in which the abnormality ignoring function is turned off.

In some embodiments, the upper computer is provided with a fourth display interface, where the fourth display interface includes a second function configuration area. The method may further include the following step S181 or step S182:
step S181: setting the second on/off state to the third state representing that the abnormality ignoring function is turned on, in response to receiving an operation of turning on the abnormality ignoring function performed in the second function configuration area; or
step S182: setting the second on/off state to the fourth state representing that the abnormality ignoring function is turned off, in response to receiving an operation of turning off the abnormality ignoring function performed in the second function configuration area.

In this manner, the abnormality ignoring function may be flexibly turned on or turned off in the second function configuration area, thereby adapting to different application scenarios to better satisfy actual manufacturing requirements.

The electrolyte injection method provided in the embodiments of the present disclosure is described below by using a battery cell station entry scenario in a secondary battery cell electrolyte injection process as an example.

In the related technologies, in a secondary electrolyte injection process using a tray-based electrolyte injection method, there are at least the following problems.
(1) A battery cell tray loaded with battery cells employs a recycling and reuse mechanism, and thus the same battery cell tray is used multiple times a day. Because it is usually impossible to identify whether electrolyte injection of a battery cell has been completed before the battery cell exits a station, if a battery cell of which electrolyte injection has been completed in the battery cell tray is not normally removed, the battery cell may enter an electrolyte injection device again along with the battery cell tray for repeated electrolyte injection, which may lead to the problem of battery cell electrolyte jetting.
(2) In a battery cell tray that enters the electrolyte injection device, there may be a battery cell with an abnormality but not picked out in a previous process, or there is a vacancy for placement of a battery cell in the battery cell tray. Therefore, it is necessary to determine whether each electrolyte injection position in the electrolyte injection device needs electrolyte injection, and a corresponding electrolyte injection amount.
(3) Because a battery cell tray is recycled, an identification barcode attached to the battery cell tray may detach due to a high temperature, vibration, etc. during recycling, so that a scanning device cannot obtain a tray identifier, then an upper computer and/or a control device cannot identify a material, and finally, electrolyte injection cannot be performed on battery cells in the battery cell tray.
(4) During manufacturing, it is usually necessary to prepare an experimental material to reduce cost and improve efficiency. The experimental material is usually in an abnormal state, and cannot flow into an electrolyte injection device to complete an electrolyte injection process, so that experimental requirements cannot be satisfied.

In addition, when a battery cell is ready to exit after electrolyte injection is completed, an electrolyte injection station exit request may be sent to an MES to upload electrolyte injection data of the battery cell to the MES, which is convenient for subsequent traceability of manufacturing data. In the related technologies, after acquiring electrolyte injection data of a battery cell, a control device for a electrolyte injection position may transmit the electrolyte injection data to a control device for a feeding area for uploading the electrolyte injection data in a battery cell station exit process. However, in a tray-based electrolyte injection scenario, other handling lines from different suppliers may exist between the electrolyte injection position and the feeding area, so that data transmission between the control device for the electrolyte injection position and the control device for the feeding area cannot be achieved, and thus the electrolyte injection data of the battery cell cannot be uploaded in the battery cell station exit process.

On this basis, an embodiment of the present disclosure provides an electrolyte injection method. The method includes a secondary electrolyte injection data acquisition process and a tray scanning station entry process.

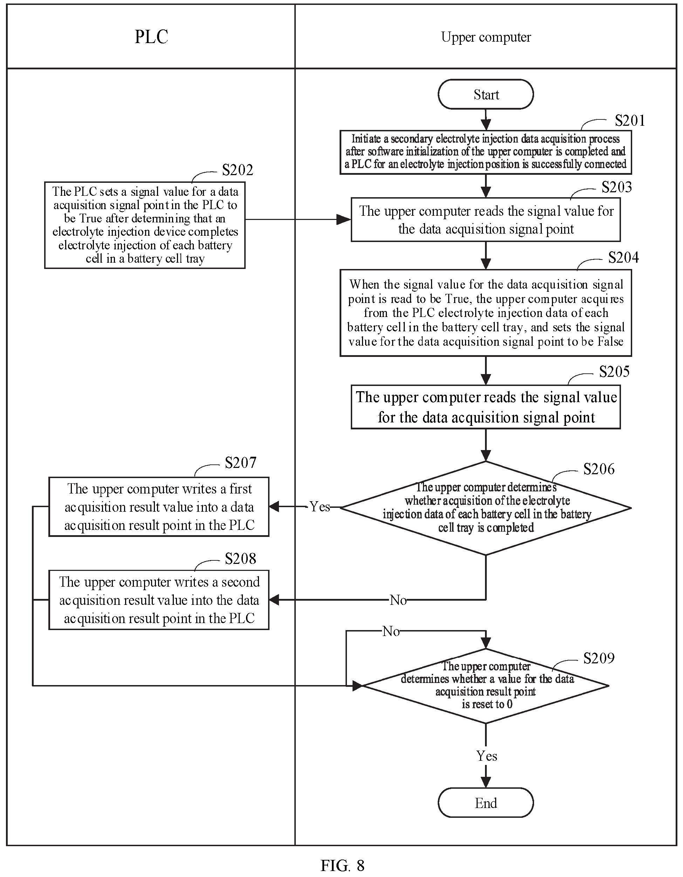

FIG. 8 is a schematic diagram showing implementation of a secondary electrolyte injection data acquisition process according to an embodiment of the present disclosure. As shown in FIG. 8, the secondary electrolyte injection data acquisition process in the embodiment of the present disclosure includes the following step S201 to step S209:
step S201: initiating a secondary electrolyte injection data acquisition process after software initialization of the upper computer is completed and a PLC for an electrolyte injection position is successfully connected;
step S202: setting, by the PLC, a signal value for a data acquisition signal point in the PLC to be True after determining that an electrolyte injection device completes electrolyte injection of each battery cell in a battery cell tray;
step S203: reading, by the upper computer, the signal value for the data acquisition signal point;
step S204: when the signal value for the data acquisition signal point is read to be True, acquiring, by the upper computer, from the PLC electrolyte injection data of each battery cell in the battery cell tray, and setting the signal value for the data acquisition signal point to be False;
step S205: recording, by the upper computer, the acquired electrolyte injection data of the battery cell into a local database;

In some implementations, after recording the electrolyte injection data of the battery cell into the local database, the upper computer may further set an electrolyte injection completion state of the battery cell as "electrolyte injection completed".
step S206: determining, by the upper computer, whether acquisition of the electrolyte injection data of each battery cell in the battery cell tray is completed;
if yes, proceeding to step S207; or if no, proceeding to step S208;
step S207: writing, by the upper computer, a first acquisition result value into a data acquisition result point in the PLC, where
the first acquisition result value may indicate that the electrolyte injection data of each battery cell in the battery cell tray is successfully acquired and recorded;
step S208: writing, by the upper computer, a second acquisition result value into the data acquisition result point in the PLC, where
the second acquisition result value may indicate that electrolyte injection data of at least one battery cell in the battery cell tray is not successfully acquired and recorded; and
step S209: determining, by the upper computer, whether a value for the data acquisition result point is reset to 0.

Here, the PLC may reset the value of the data acquisition result point to 0 before the next secondary electrolyte injection data acquisition process. If it is determined that the value of the data acquisition result point has been reset to 0, the current secondary electrolyte injection data acquisition process ends.

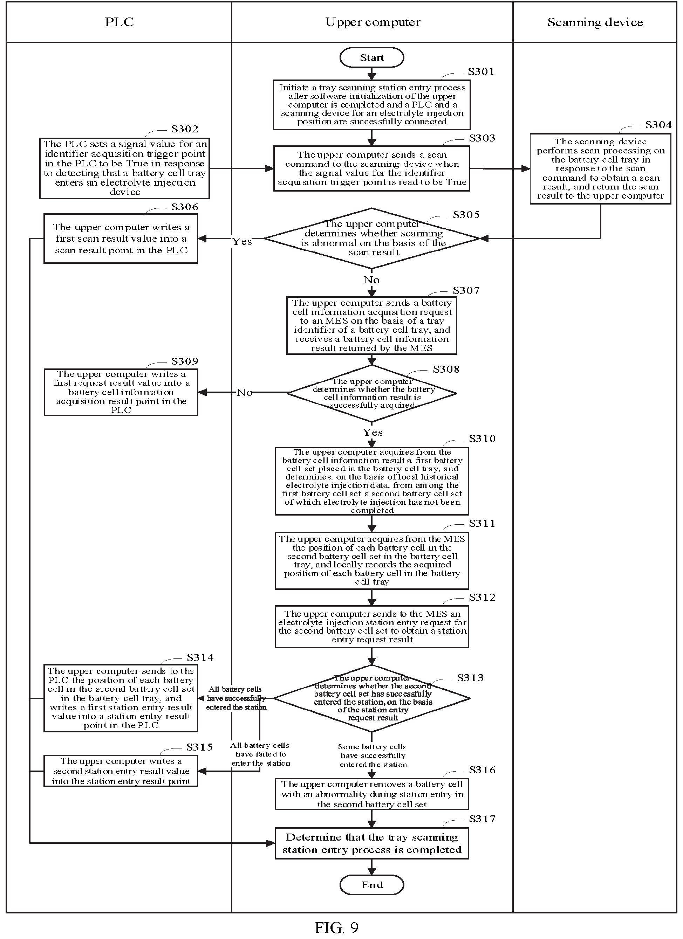

FIG. 9 is a schematic diagram showing implementation of a tray scanning station entry process according to an embodiment of the present disclosure. As shown in FIG. 9, the tray scanning station entry process includes the following step S301 to step S317:
step S301: initiating a tray scanning station entry process after software initialization of the upper computer is completed and a PLC and a scanning device for an electrolyte injection position are successfully connected;
step S302: setting, by the PLC, a signal value for an identifier acquisition trigger point in the PLC to be True in response to detecting that a battery cell tray enters an electrolyte injection device;
step S303: sending, by the upper computer, a scan command to the scanning device when the signal value for the identifier acquisition trigger point is read to be True;

In some implementations, before sending the scan command to the scanning device, the upper computer may first determine whether an idle branch is currently turned on, and send the scan command to the scanning device when the idle branch is not turned on. It may be understood that when the idle branch is turned on, the upper computer can shield a peripheral such as the scanning device, an interface provided by an MES, or the like, to perform an idle test on software of the upper computer.
step S304: performing, by the scanning device, scan processing on the battery cell tray in response to the scan command to obtain a scan result, and returning the scan result to the upper computer;
step S305: determining, by the upper computer, whether scanning is abnormal on the basis of the scan result;
if yes, proceeding to step S306; or if no, proceeding to step S307;
step S306: writing, by the upper computer, a first scan result value into a scan result point in the PLC, where
the first scan result value represents that a scanning abnormality occurs to the scanning device;

In some implementations, the PLC may enter an abnormality processing process when the first scan result value is read from the scan result point.
step S307: sending, by the upper computer, a battery cell information acquisition request to the MES on the basis of a tray identifier of a battery cell tray, and receiving a battery cell information result returned by the MES;

Here, the battery cell information acquisition request may be used to request to acquire from the MES information about each battery cell placed in the battery cell tray.

In some implementations, before sending the battery cell information acquisition request to the MES, the upper computer may first determine whether an idle branch is currently turned on, and send the battery cell information acquisition request to the MES on the basis of the tray identifier of the battery cell tray when the idle branch is not turned on.
step S308: determining, by the upper computer, whether the battery cell information result is successfully acquired;
if yes, proceeding to step S310; or if no, proceeding to step S309;
step S309: writing, by the upper computer, a first request result value into a battery cell information acquisition result point in the PLC, where
the first request result value represents that acquisition of the battery cell information result is abnormal. In addition, the upper computer may further print the battery cell information result to obtain an abnormality log.
step S310: acquiring, by the upper computer, from the battery cell information result a first battery cell set placed in the battery cell tray, and determining, on the basis of local historical electrolyte injection data, from among the first battery cell set a second battery cell set of which electrolyte injection has not been completed;
step S311: acquiring, by the upper computer, from the MES the position of each battery cell in the second battery cell set in the battery cell tray, and locally recording the acquired position of each battery cell in the battery cell tray;
step S312: sending, by the upper computer, to the MES an electrolyte injection station entry request for the second battery cell set to obtain a station entry request result;
step S313: determining, by the upper computer, whether the second battery cell set has successfully entered the station, on the basis of the station entry request result;
proceeding to step S314 if all battery cells in the second battery cell set have successfully entered the station;
proceeding to step S315 if all battery cells in the second battery cell set have failed to enter the station; or
proceeding to step S316 if some battery cells in the second battery cell set have successfully entered the station;
step S314: sending, by the upper computer, to the PLC the position of each battery cell in the second battery cell set in the battery cell tray, and writing a first station entry result value into a station entry result point in the PLC, where
the first station entry result value represents that all battery cells in the second battery cell set have successfully entered the station.

After receiving the position of each battery cell in the second battery cell set in the battery cell tray, the PLC may control the electrolyte injection device to perform electrolyte injection on each battery cell on the basis of the position corresponding to each battery cell.
step S315: writing, by the upper computer, a second station entry result value into the station entry result point, where
the second station entry result value represents that all battery cells in the second battery cell set have an abnormality during station entry;
step S316: removing, by the upper computer, a battery cell with an abnormality during station entry in the second battery cell set; and
step S317: determining that the tray scanning station entry process is completed.

According to the electrolyte injection method provided in the embodiment of the present disclosure, on the basis of the secondary electrolyte injection data acquisition process and the tray scanning station entry process, an electrolyte injection completion state of each battery cell in the battery cell tray can be quickly identified at the electrolyte injection station, so as to determine which position in the battery cell tray needs battery cell electrolyte injection, thereby reducing a situation of erroneous electrolyte injection. In addition, electrolyte injection data is saved to a local database of the upper computer immediately after battery cell electrolyte injection is completed. In this case, even if the device is powered off when battery cells are stacked on a handling line, the electrolyte injection data will not be lost due to power failure, which can reduce the problem of no data for batches of battery cells due to loss of electrolyte injection data.

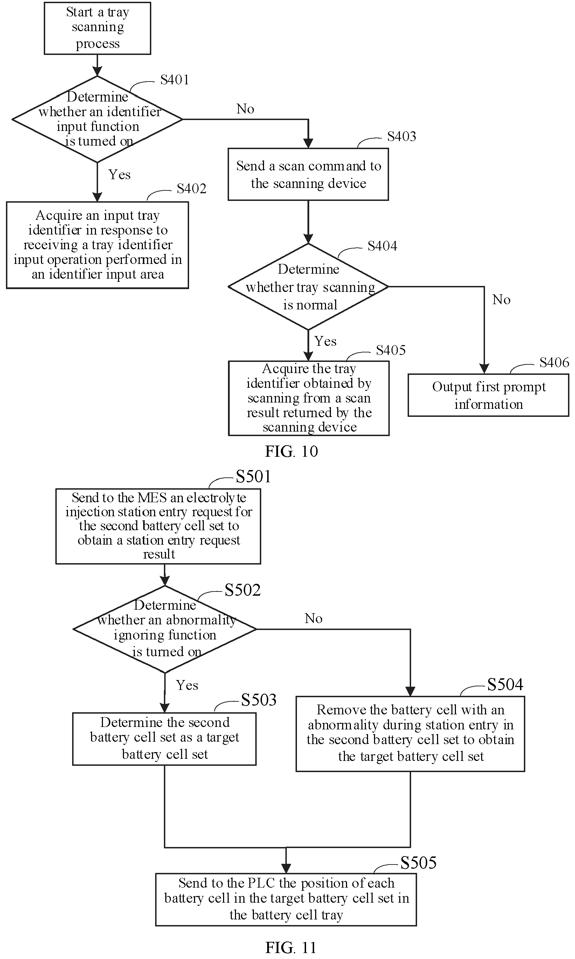

In some implementations, the tray identifier of the battery cell tray may be manually input by an operator or obtained by the upper computer through scanning with the scanning device. In the process of obtaining the tray identifier through scanning with the scanning device in step S303 to step S306, when the upper computer reads that the signal value for the identifier acquisition trigger point is True, as shown in FIG. 10, the following step S401 to step S406 may be performed:
step S401: determining whether an identifier input function is turned on;
if yes, proceeding to step S402; or if no, proceeding to step S403;
step S402: acquiring an input tray identifier in response to receiving a tray identifier input operation performed in an identifier input area;
step S403: sending a scan command to a scanning device;
step S404: determining whether tray scanning is normal;
if yes, proceeding to step S405; or if no, proceeding to step S406;
step S405: acquiring the tray identifier obtained by scanning from a scan result returned by the scanning device; and
step S406: outputting first prompt information, where
the first prompt information may be used to prompt the operator whether to turn on the identifier input function.

In this manner, when tray scanning is abnormal, the operator may turn on the identifier input function and manually input the tray identifier in the identifier input area, thereby saving the time spent on troubleshooting when the tray scanning is abnormal, and improving manufacturing efficiency.

In some implementations, it is considered that the following specialized battery cells may exist during completion of a battery cell manufacturing process:
(1) experimental materials introduced by battery cell process engineers during optimization of the battery cell manufacturing process, the experimental materials may be determined by the MES as not satisfying an electrolyte injection condition, which leads to an abnormality during station entry, and thus the station cannot be normally entered for electrolyte injection; and
(2) battery cells that cannot normally enter the station due to an abnormality in the previous process.

Therefore, step S312 to step S316 may be further improved. As shown in FIG. 11, in an improved solution, the upper computer may determine a target battery cell set to be subjected to electrolyte injection in a manner described in the following step S501 to step S505:
step S501: sending to the MES an electrolyte injection station entry request for the second battery cell set to obtain a station entry request result;
step S502: determining whether an abnormality ignoring function is turned on;
if yes, proceeding to step S503; or if no, proceeding to step S504;
step S503: determining the second battery cell set as a target battery cell set;
step S504: removing the battery cell with an abnormality during station entry in the second battery cell set to obtain the target battery cell set; and
step S505: sending to the PLC the position of each battery cell in the target battery cell set in the battery cell tray.

In this manner, the operator can flexibly turn on or turn off the abnormality ignoring function based on actual manufacturing requirements. When the abnormality ignoring function is turned on, an abnormality of a battery cell during station entry may be ignored, and the second battery cell set may be directly determined as the target battery cell set to be subjected to electrolyte injection, which can largely reduce time for the battery cell with an abnormality during station entry to complete the process, reduce the occurrence of expiration of materials, and satisfy the requirements of battery cell process engineers for testing new processes, so as to greatly shorten duration for testing experimental materials, and reduce time for replacing materials due to human or environmental factors, thereby greatly improving manufacturing efficiency.

It should be noted here that: The above descriptions of the various embodiments tend to emphasize differences between the various embodiments. For same or similar parts thereof, reference may be made to these embodiments.

It should be understood that reference throughout this specification to "one embodiment" or "an embodiment" means that a particular feature, structure, or characteristic described in connection with the embodiment is included in at least one embodiment of the present disclosure. Therefore, "in one embodiment" or "in an embodiment" appearing throughout the specification does not necessarily refer to the same embodiment. In addition, these particular features, structures, or characteristics may be combined in one or more embodiments in any suitable manner. It should be understood that in the various embodiments of the present disclosure, sequence numbers of the above steps/processes do not mean execution sequences. The execution sequences of the steps/processes should be determined according to functions and internal logic of the steps/processes, and should not be construed as any limitation on the implementation processes of the embodiments of the present disclosure. The above sequence numbers of the embodiments of the present disclosure are merely for description purposes, and do not imply any superiority or inferiority of the embodiments.

It should be noted that the term "include", "comprise", or any other variant thereof as used herein is intended to cover a non-exclusive inclusion, so that a process, method, article, or apparatus that includes a series of elements includes not only those elements but also other elements that are not expressly listed, or includes elements inherent to such a process, method, article, or apparatus. Without further restrictions, an element defined by the statement "including a..." does not exclude the existence of another identical element in the process, method, article or apparatus including the element.

In the several embodiments provided in the present disclosure, it should be understood that the disclosed controller and method may be implemented in other manners. The controller embodiments described above are merely illustrative. For example, the division of the units is merely a logical function division, and there may be other division manners in actual implementation. For example, a plurality of units or assemblies may be combined or may be integrated into another system, or some features may be ignored or not performed. In addition, the coupling or direct coupling or communication connection between various components shown or discussed may be implemented by using some interfaces, and the indirect coupling or communication connection between the controllers or units may be implemented in an electrical, mechanical or another form.

The units described as separate components may or may not be physically separated, and the components shown as units may or may not be physical units, that is, may be located in one place, or may be distributed over a plurality of network units. Some or all of the units may be selected according to actual requirements to achieve the purpose of the solution of this embodiment. In addition, various functional units in the various embodiments of the present disclosure may be integrated into one processing unit, or various units may be present separately, or two or more units may be integrated into one unit. The above integrated unit may be implemented in a form of hardware, or may be implemented in a form of a hardware and software functional unit.

The above descriptions are merely implementations of the present disclosure, and are not intended to limit the protection scope of the present disclosure. The changes or replacements readily figured out by those skilled in the art within the technical scope disclosed in the present disclosure shall all fall within the protection scope of the present disclosure.

### Industrial applicability

The embodiments of the present disclosure provide an electrolyte injection system and an electrolyte injection method, where the electrolyte injection system includes an electrolyte injection device, an upper computer, and a control device. The electrolyte injection device is used for injecting an electrolyte into a battery cell in a battery cell electrolyte injection process. The upper computer is used for: acquiring electrolyte injection data of the battery cell after battery cell electrolyte injection is completed, and locally recording the electrolyte injection data of the battery cell as historical electrolyte injection data; determining a first battery cell set placed in a battery cell tray that currently enters the electrolyte injection device; on the basis of the local historical electrolyte injection data, determining from among the first battery cell set a second battery cell set, electrolyte injection of which has not been completed; determining from among the second battery cell set a target battery cell set to be subjected to electrolyte injection; and sending to the control device the position of each target battery cell in the target battery cell set in the battery cell tray. The control device is used for controlling the electrolyte injection device to perform electrolyte injection on the target battery cell set on the basis of the position corresponding to each target battery cell. In this manner, repeated electrolyte injection of the battery cell can be reduced, thereby improving product quality and manufacturing efficiency, and saving cost.

## Claims

1. An electrolyte injection system, comprising an electrolyte injection device, an upper computer, and a control device, wherein:
the electrolyte injection device is configured to inject an electrolyte into a battery cell in a battery cell electrolyte injection process;
the upper computer is configured to acquire electrolyte injection data of the battery cell after battery cell electrolyte injection is completed, and locally record the electrolyte injection data of the battery cell as historical electrolyte injection data;
the upper computer is further configured to: determine a first battery cell set placed in a battery cell tray that currently enters the electrolyte injection device; on the basis of the local historical electrolyte injection data, determine from among the first battery cell set a second battery cell set, electrolyte injection of which has not been completed; determine from among the second battery cell set a target battery cell set to be subjected to electrolyte injection; and send to the control device the position of each target battery cell in the target battery cell set in the battery cell tray; and
the control device is configured to control the electrolyte injection device to perform electrolyte injection on the target battery cell set on the basis of the position corresponding to each target battery cell.

2. The electrolyte injection system according to claim 1, wherein:
the historical electrolyte injection data comprises electrolyte injection data corresponding to at least one battery cell of which electrolyte injection has been completed;
the control device is configured to acquire the electrolyte injection data of the battery cell in the battery cell electrolyte injection process, and send a data acquisition signal to the upper computer after determining that the electrolyte injection device completes the electrolyte injection of the battery cell; and
the upper computer is configured to acquire the electrolyte injection data of the battery cell from the control device on the basis of the position of the battery cell in the battery cell tray, in response to receiving the data acquisition signal, and locally record the electrolyte injection data of the battery cell.

3. The electrolyte injection system according to claim 2, wherein:
the upper computer is provided with a first display interface having a data deletion area; and
the upper computer is configured to acquire a tray identifier and/or a battery cell identifier to be subjected to data deletion, in response to receiving an electrolyte injection data deletion operation performed in the data deletion area, and determine and locally delete electrolyte injection data corresponding to at least one battery cell on the basis of the tray identifier and/or the battery cell identifier to be subjected to data deletion.

4. The electrolyte injection system according to any one of claims 1 to 3, wherein the upper computer is configured to acquire a tray identifier of the battery cell tray, and acquire from a manufacturing execution system the first battery cell set placed in the battery cell tray, on the basis of the tray identifier.

5. The electrolyte injection system according to claim 4, wherein:
the control device is configured to send an identifier acquisition signal to the upper computer in response to detecting that the battery cell tray enters the electrolyte injection device; and
the upper computer is configured to acquire a first on/off state in response to receiving the identifier acquisition signal, and acquire the tray identifier of the battery cell tray on the basis of the first on/off state, wherein the first on/off state represents whether an identifier input function is turned on.

6. The electrolyte injection system according to claim 5, wherein:
the upper computer is provided with a second display interface having an identifier input area; and
the upper computer is configured to acquire the input tray identifier in response to receiving a tray identifier input operation performed in the identifier input area, when the first on/off state is a first state, wherein the first state represents that the identifier input function is turned on.

7. The electrolyte injection system according to claim 5 or 6, further comprising a scanning device, wherein:
the upper computer is configured to send a scan command to the scanning device when the first on/off state is a second state;
the scanning device is configured to perform scan processing on the battery cell tray in response to the scan command to obtain a scan result, and return the scan result to the upper computer; and
the upper computer is configured to determine the tray identifier on the basis of the scan result, wherein the second state represents that the identifier input function is turned off.

8. The electrolyte injection system according to claim 7, wherein:
the upper computer is configured to acquire the tray identifier obtained by scanning from the scan result when the scan result represents that tray scanning is normal; or
the upper computer is configured to output first prompt information when the scan result represents that tray scanning is abnormal, wherein the first prompt information is used for prompting whether to turn on the identifier input function.

9. The electrolyte injection system according to any one of claims 5 to 8, wherein:
the upper computer comprises a third display interface having a first function configuration area; and
the upper computer is configured to set the first on/off state to the first state representing that the identifier input function is turned on, in response to receiving an operation of turning on the identifier input function performed in the first function configuration area; or
the upper computer is configured to set the first on/off state to the second state representing that the identifier input function is turned off, in response to receiving an operation of turning off the identifier input function performed in the first function configuration area.

10. The electrolyte injection system according to any one of claims 1 to 9, wherein the upper computer is configured to acquire a second on/off state, and determine from among the second battery cell set the target battery cell set on the basis of the second on/off state, wherein the second on/off state represents whether an abnormality ignoring function is turned on.

11. The electrolyte injection system according to claim 10, wherein the upper computer is configured to determine the second battery cell set as the target battery cell set when the second on/off state is a third state, wherein the third state represents that the abnormality ignoring function is turned on.

12. The electrolyte injection system according to claim 10 or 11, wherein the upper computer is configured to: send to the manufacturing execution system an electrolyte injection station entry request for the second battery cell set to obtain a station entry request result; determine at least one battery cell with an abnormality during station entry in the second battery cell set on the basis of the station entry request result, when the second on/off state is a fourth state; and remove the at least one battery cell with an abnormality during station entry from the second battery cell set to obtain the target battery cell set, wherein the fourth state represents that the abnormality ignoring function is turned off.

13. The electrolyte injection system according to any one of claims 10 to 12, wherein:
the upper computer is provided with a fourth display interface having a second function configuration area;
the upper computer is configured to set the second on/off state to the third state representing that the abnormality ignoring function is turned on, in response to receiving an operation of turning on the abnormality ignoring function performed in the second function configuration area; or
the upper computer is configured to set the second on/off state to the fourth state representing that the abnormality ignoring function is turned off, in response to receiving an operation of turning off the abnormality ignoring function performed in the second function configuration area.

14. An electrolyte injection method, applied to an upper computer, comprising:
determining a first battery cell set placed in a battery cell tray that currently enters an electrolyte injection device;
on the basis of local historical electrolyte injection data of the upper computer, determining from among the first battery cell set a second battery cell set, electrolyte injection of which has not been completed, wherein the historical electrolyte injection data is acquired and locally recorded by the upper computer after battery cell electrolyte injection is completed;
determining from among the second battery cell set a target battery cell set to be subjected to electrolyte injection; and
sending to the control device the position of each target battery cell in the target battery cell set in the battery cell tray, so that the control device controls the electrolyte injection device to perform electrolyte injection on the target battery cell set on the basis of the position corresponding to each target battery cell.

15. The electrolyte injection method according to claim 14, wherein:
the historical electrolyte injection data comprises electrolyte injection data corresponding to at least one battery cell of which electrolyte injection has been completed; and
before the on the basis of local historical electrolyte injection data of the upper computer, determining from among the first battery cell set a second battery cell set, electrolyte injection of which has not been completed, the method further comprises:
acquiring electrolyte injection data of the battery cell from the control device on the basis of the position of the battery cell in the battery cell tray, in response to receiving a data acquisition signal sent by the control device, wherein the electrolyte injection data of the battery cell is acquired by the control device in the battery cell electrolyte injection process, and the data acquisition signal is sent by the control device to the upper computer after it is determined that the electrolyte injection device completes the electrolyte injection of the battery cell; and
locally recording the electrolyte injection data of the battery cell.

16. The electrolyte injection method according to claim 15, wherein the upper computer is provided with a first display interface having a data deletion area, and the method further comprises:
acquiring a tray identifier and/or a battery cell identifier to be subjected to data deletion, in response to receiving an electrolyte injection data deletion operation performed in the data deletion area; and
determining and deleting electrolyte injection data corresponding to at least one battery cell on the basis of the tray identifier and/or the battery cell identifier to be subjected to data deletion.

17. The electrolyte injection method according to any one of claims 14 to 16, wherein the determining a first battery cell set placed in a battery cell tray that currently enters an electrolyte injection device comprises:
acquiring a tray identifier of the battery cell tray; and
acquiring from a manufacturing execution system the first battery cell set placed in the battery cell tray, on the basis of the tray identifier.

18. The electrolyte injection method according to claim 17, wherein the acquiring a tray identifier of the battery cell tray comprises:
acquiring a first on/off state in response to receiving an identifier acquisition signal sent by the control device, wherein the first on/off state represents whether an identifier input function is turned on, and the identifier acquisition signal is sent by the control device when it is detected that the battery cell tray enters the electrolyte injection device; and
acquiring the tray identifier of the battery cell tray on the basis of the first on/off state.

19. The electrolyte injection method according to claim 18, wherein:
the upper computer is provided with a second display interface having an identifier input area; and
the acquiring the tray identifier of the battery cell tray on the basis of the first on/off state comprises one of the following:
acquiring the input tray identifier in response to receiving a tray identifier input operation performed in the identifier input area, when the first on/off state is a first state, wherein the first state represents that the identifier input function is turned on; and
sending a scan command to a scanning device when the first on/off state is a second state, and determining the tray identifier on the basis of a scan result returned by the scanning device in response to the scan command, wherein the second state represents that the identifier input function is turned off.

20. The electrolyte injection method according to claim 19, wherein the determining the tray identifier on the basis of a scan result returned by the scanning device in response to the scan command comprises one of the following:
acquiring the tray identifier obtained by scanning from the scan result when the scan result represents that tray scanning is normal; and
outputting first prompt information when the scan result represents that tray scanning is abnormal, wherein the first prompt information is used for prompting whether to turn on the identifier input function.

21. The electrolyte injection method according to any one of claims 14 to 20, wherein the determining from among the second battery cell set a target battery cell set to be subjected to electrolyte injection comprises:
acquiring a second on/off state, wherein the second on/off state represents whether an abnormality ignoring function is turned on; and
determining from among the second battery cell set the target battery cell set on the basis of the second on/off state.

22. The electrolyte injection method according to claim 21, wherein the determining from among the second battery cell set the target battery cell set on the basis of the second on/off state comprises one of the following:
determining the second battery cell set as the target battery cell set when the second on/off state is a third state, wherein the third state represents that the abnormality ignoring function is turned on;
sending to the manufacturing execution system an electrolyte injection station entry request for the second battery cell set to obtain a station entry request result; determining at least one battery cell with an abnormality during station entry in the second battery cell set on the basis of the station entry request result, when the second on/off state is a fourth state; and removing the at least one battery cell with an abnormality during station entry from the second battery cell set to obtain the target battery cell set, wherein the fourth state represents that the abnormality ignoring function is turned off.
